(19) Europäisches Patentamt

European Patent Office

Office européen des brevets

(11) EP 4 564 311 A1

(12) **EUROPEAN PATENT APPLICATION**

(43) Date of publication:
04.06.2025 Bulletin 2025/23

(21) Application number: 24212335.4

(22) Date of filing: 12.11.2024

(51) International Patent Classification (IPC):
*G06V 10/764* (2022.01)    *G06N 3/09* (2023.01)
*G06T 7/00* (2017.01)    *G06V 10/774* (2022.01)
*G06V 10/82* (2022.01)    *G06V 20/60* (2022.01)

(52) Cooperative Patent Classification (CPC):
**G06V 10/764; G06N 3/09; G06V 10/774;
G06V 10/82; G06V 20/60;** G06V 2201/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.12.2023 IN 202311081750**

(71) Applicant: **Airbus SAS
31700 Blagnac (FR)**

(72) Inventor: **CHANDRASHEKAR, Puneeth Bilagunda
Bristol, BS34 7PA (GB)**

(74) Representative: **Ribeiro, James Michael
Withers & Rogers LLP
2 London Bridge
London SE1 9RA (GB)**

(54) **METHOD OF TRAINING MACHINE-LEARNING MODEL**

(57) A method of training a machine-learning model to identify image features, the method comprising: a. providing a set of groundtruth regions, each groundtruth region comprising an annotation of a feature in training image data; b. providing a set of ignore regions; c. receiving a set of predicted feature regions from the machine-learning model, each predicted feature region comprising a prediction of a feature in the training image data; d. for each predicted feature region which overlaps with a corresponding groundtruth region, generating a similarity coefficient indicative of a similarity between the predicted feature region and the corresponding groundtruth region; e. determining a loss value based on the similarity coefficients; f. training the machine-learning model on a basis of the loss value; g. for each predicted feature region which does not overlap with any of the ignore regions and does not overlap with any of the groundtruth regions, training the machine-learning model on a basis of the predicted feature region; and h. for each predicted feature region which overlaps with a corresponding ignore region and does not overlap with any of the groundtruth regions, ignoring the predicted feature region so that it is not used to train the machine-learning model.

FIG. 16

**Description**

FIELD OF THE INVENTION

The present invention relates to method of training a machine-learning model to identify image features, such as dents or other surface defects. The invention also relates to a computer system and computer software configured to train a machine-learning model.

BACKGROUND OF THE INVENTION

Object detection is a known method to localize objects within an image. Modern deep learning algorithms solve this problem by collecting huge amounts of images with desired objects in them. A human marks a bounding box around it. These boxes are called ground truth boxes or annotations and these are the values that an algorithm converges to during the iterative learning process. The person who does the annotation is called an annotator.

A deep learning algorithm then tries to learn this through optimization techniques to converge to the exact values given by the annotator. The process of convergence to the annotated values happens over several iterations through a process called backpropagation and gradient descent. Gradient descent calculates the error between the model prediction and the ground truth and tries to minimize this error.

In the case of detecting a rigid object with a clear outline it may be easy for an annotator to know the boundary of an object. In the case of a feature within an object (such as a dent) this may be more difficult.

Due to the ambiguous nature of dents and the frames being fed randomly for annotation, annotators can sometimes annotate or skip the ambiguous dents depending on their individual preference. Where it is annotated, the machine-learning model tries to learn it as a "yes" and where it is skipped, it tries to learn it as a "no". Due to this, the optimizer is also left in a contradictory and inconsistent situation to sometimes learn and sometimes not learn such patterns. Sometimes the ambiguous dents are so insignificant that if the machine-learning model is forced to learn them, the machine-learning model might end up detecting a lot of false positives making it very sensitive.

In the usual case, there is a specific class that the algorithm uses to distinguish and learn such false detections from the actual ones, called the background class. In the ambiguous case, the background class will be at odds with the dent class and cause inconsistencies.

When frames are annotated, they may be selected randomly from a video, due to which the annotator generally does not get the temporal sequence as a cue to locate the dent and mark the right bounding box. Since this is a manual process which is already tedious, providing the annotator with the temporal sequence for reference will cause the annotator more difficulty and not really solve the problem.

The annotation process may also require that the same frame be given to multiple annotators to have better consistency in the bounding box. This method was introduced to mostly reduce the errors committed due to lethargy and not solve the issues due to the ambiguity in not being able to decide the boundary. Voting techniques like these will still leave the box undecided, and consecutive frames can still be inconsistent.

Since the optimization process is blind to the knowledge of the real world and is only looking at converging to the ground truth boxes provided by the annotator, similar dents being annotated differently leave it in a confused state because it is forced to converge to different values for similar or the same patterns, which would create contradictions.

SUMMARY OF THE INVENTION

A method of training a machine-learning model to identify image features, the method comprising: a. providing a set of groundtruth regions, each groundtruth region comprising an annotation of a feature in training image data; b. providing a set of ignore regions; c. receiving a set of predicted feature regions from the machine-learning model, each predicted feature region comprising a prediction of a feature in the training image data; d. for each predicted feature region which overlaps with a corresponding groundtruth region, generating a similarity coefficient indicative of a similarity between the predicted feature region and the corresponding groundtruth region; e. determining a loss value based on the similarity coefficients; f. training the machine-learning model on a basis of the loss value; g. for each predicted feature region which does not overlap with any of the ignore regions and does not overlap with any of the groundtruth regions, training the machine-learning model on a basis of the predicted feature region; and h. for each predicted feature region which overlaps with a corresponding ignore region and does not overlap with any of the groundtruth regions, ignoring the predicted feature region so that it is not used to train the machine-learning model.

Optionally b. comprises providing the set of ignore regions by inspecting an object and generating the ignore regions on a basis of the inspection.

Optionally b. comprises providing the set of ignore regions by receiving inputs from a manual inspection of an object and generating the ignore regions on a basis of the inputs.

Optionally b. comprises providing the set of ignore regions by inspecting an object with a sensor to generate three-dimensional inspection data and generating the ignore regions on a basis of the three-dimensional inspection data.

Optionally the training image data comprises one or more images of the object.

Optionally the method further comprises generating the training image data by imaging the object.

Optionally the object is imaged with visible light.

Optionally the training image data comprises a series of images of the object which each contain the same feature viewed from a different viewing angle.

Optionally the method further comprises generating the training image data by imaging the object from a series of different viewing angles, for example the object is imaged with visible light.

Optionally the training image data comprises a series of images of an object which each contain the same feature viewed from a different viewing angle.

Optionally the method further comprises generating the training image data by imaging the object from a series of different viewing angles, for examplethe object is imaged with visible light.

Optionally a. comprises providing the set of groundtruth regions by displaying the training image data to a human annotator and receiving the groundtruth regions as inputs from the human annotator, each groundtruth region comprising an annotation of a boundary of a feature in the training image data.

Optionally c.-f. are repeated, each repeat comprising a respective training epoch.

Optionally c.-h. are repeated, each repeat comprising a respective training epoch.

Optionally each feature comprises a surface defect.

Optionally each feature comprises a surface defect of an aircraft.

Optionally each feature comprises a dent.

Optionally the similarity coefficient is a Jaccard index.

Optionally the method further comprises: for each predicted feature region which does not overlap with any of the ignore regions and does not overlap with any of the groundtruth regions, training the machine-learning model to classify the predicted feature region as a background class; and for each predicted feature region which overlaps with a corresponding ignore region and does not overlap with any of the groundtruth regions, ignoring the predicted feature region so that it is not used to train the machine-learning model to classify the predicted feature region as a background class.

A further aspect of the invention provides a method of training a machine-learning model to identify image features, the method comprising: providing a set of groundtruth regions, each groundtruth region comprising an annotation of a feature in training image data; providing a set of ignore regions; receiving a set of predicted feature regions from the machine-learning model, each predicted feature region comprising a prediction of a feature in the training image data; for each predicted feature region which overlaps with a corresponding groundtruth region, generating a similarity coefficient indicative of a similarity between the predicted feature region and the corresponding groundtruth region; determining a loss value based on the similarity coefficients; training the machine-learning model on a basis of the loss value; for each predicted feature region which does not overlap with any of the ignore regions and does not overlap with any of the groundtruth regions, training the machine-learning model to classify the predicted feature region as background; and for each predicted feature region which overlaps with a corresponding ignore region and does not overlap with any of the groundtruth regions, ignoring the predicted feature region so that it is not used to train the machine-learning model to classify the predicted feature region as background.

A further aspect of the invention provides a method of training a machine-learning model to identify image features, the method comprising: providing a set of groundtruth regions, each groundtruth region comprising an annotation of a feature in training image data; providing a set of ignore regions; receiving a set of predicted feature regions from the machine-learning model, each predicted feature region comprising a prediction of a feature in the training image data; for each predicted feature region which overlaps with a corresponding groundtruth region, generating a similarity coefficient indicative of a similarity between the predicted feature region and the corresponding groundtruth region; determining a loss value based on the similarity coefficients; training the machine-learning model on a basis of the loss value; for each predicted feature region which does not overlap with any of the ignore regions and does not overlap with any of the groundtruth regions, training the machine-learning model to unlearn the predicted feature region; and for each predicted feature region which overlaps with a corresponding ignore region and does not overlap with any of the groundtruth regions, ignoring the predicted feature region so that it is not used to train the machine-learning model to unlearn the predicted feature region.

A further aspect of the invention provides a computer system configured to train a machine-learning model by the method of any preceding aspect.

A further aspect of the invention provides computer software configured to train a machine-learning model by the method of any preceding aspect.

BRIEF DESCRIPTION OF THE DRAWINGS

Embodiments of the invention will now be described with reference to the accompanying drawings, in which:

Figure 1 shows a computer system;

Figure 2 shows an aircraft;

Figure 3 shows a manual method of generating ignore regions;

Figure 4 shows an aircraft being scanned by a LIDAR sensor;

Figure 5 shows an automated method of generating ignore regions;

Figure 6 shows the aircraft being scanned by a camera to generate training image data;

Figure 7 shows four exemplary training images;

Figure 8 shows ignore regions superimposed on the exemplary training images;

Figure 9 shows the generation of groundtruth regions;

Figure 10 shows ignore regions and groundtruth regions superimposed on the exemplary training images;

Figure 11 shows the removal of ignore regions in pre-processing;

Figure 12 shows ignore regions and groundtruth regions superimposed on the exemplary training images after pre-processing;

Figure 13 shows the generation of predicted feature regions;

Figure 14 shows predicted feature regions superimposed on the exemplary training images;

Figure 15 shows all regions superimposed on the exemplary training images;

Figure 16 shows a training phase in which the machine-learning model is trained by a training engine; and

Figure 17 shows selected key steps of the training phase.

DETAILED DESCRIPTION OF EMBODIMENT(S)

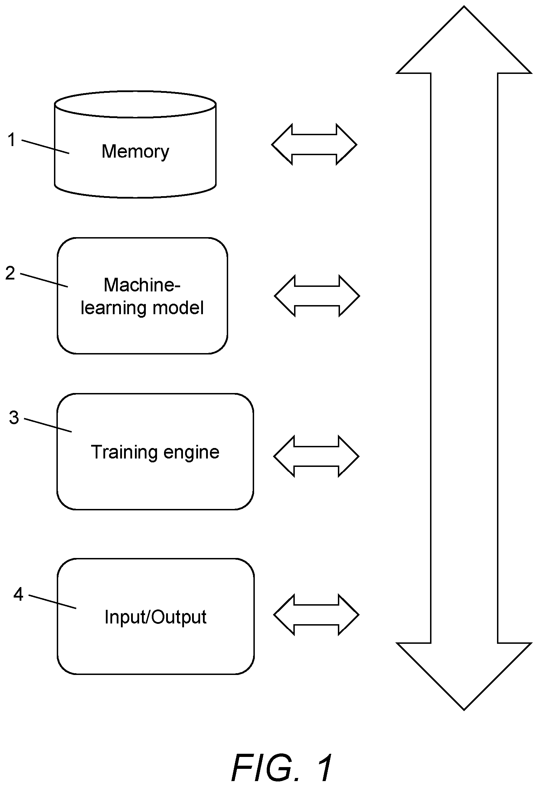

Figure 1 is a schematic view showing various elements of a computer system for identifying image features. The computer system comprises a memory 1, a machine-learning model 2, a training engine 3, and various input/output devices 4.

The computer system comprises computer software configured to train the machine-learning model by the method described below.

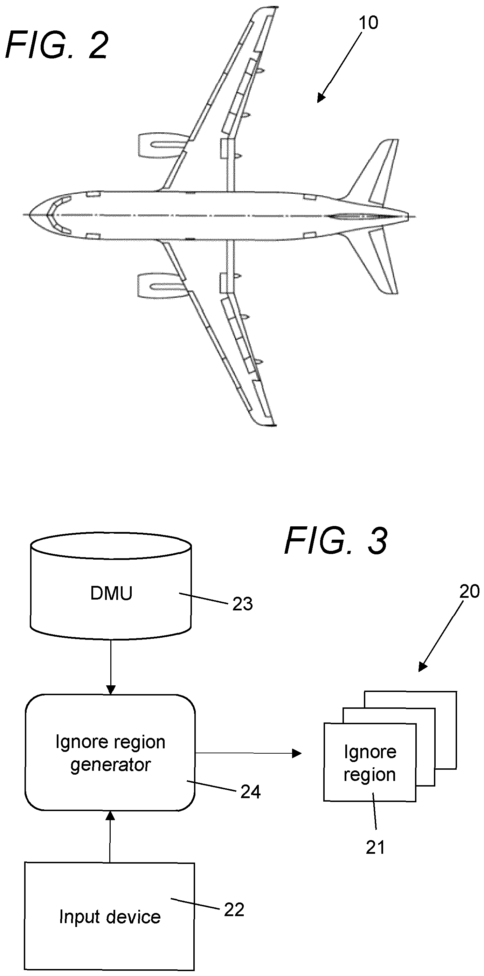

In this example the machine-learning model 2 is used to identify features within an object, for instance surface defects (such as dents or scratches) of an aircraft 10 shown in Figure 2. Aircraft are required to be inspected periodically, and the identification of surface defects can be part of such an inspection. Once a defect is identified automatically by the machine-learning model 2, the defect can either be repaired or manually inspected.

Before being used to identify surface defects in an inference phase, the machine-learning model 2 must be trained in a training phase. The training phase described below broadly involves a pre-training process of providing groundtruth regions and ignore regions; and a training process involving receiving a set of predicted feature regions from the machine-learning model and training the machine-learning model 2 accordingly.

Figure 3 shows a manual process for generating a set 20 of ignore regions 21. The ignore regions 21 are generated by receiving inputs from a manual inspection of the aircraft 10 via an input device 22. That is, a human inspector visually inspects the aircraft 10, and inputs the locations of any visible defects into the input device. A digital mock-up (DMU) 23 of the aircraft 10 provides a 3D representation of the aircraft 10. An ignore region generator 24 (which may be part of the computer system of Figure 1, or another computer system) receives the inputs from the input device 22, superimposes them onto the DMU 23, and generates the set of ignore regions 21 accordingly. Each ignore region 21 may comprise a boundary of a defect, such as a rectangular bounding box, or any other shape (regular or irregular) which surrounds a defect. Alternatively each ignore region 21 may comprise a collection of pixels which are each associated with a defect, that is they lie within the boundary of a defect.

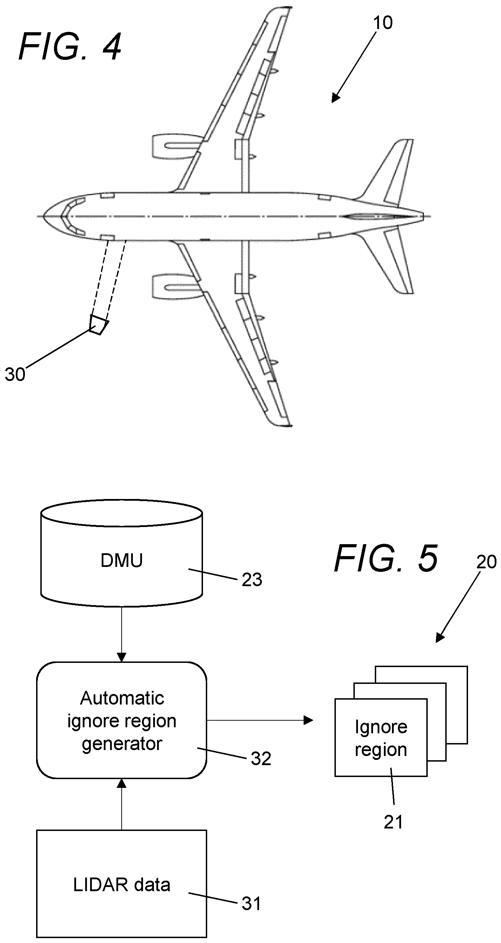

Figures 4 and 5 show an alternative automatic process for generating the set 20 of ignore regions 21. In this case the ignore regions 21 are provided by inspecting the aircraft with a sensor 30 (such as LIDAR sensor) to generate three-dimensional inspection data 31 (such as LIDAR data) and generating the ignore regions 21 on a basis of the inspection data 31. The ignore regions 21 are generated automatically by an automatic ignore region generator 32 (which may be part of the computer system of Figure 1, or another computer system) based on the inspection data 31 and the DMU 23. As in Figure 3, each ignore region 21 may comprise a boundary of a defect, such as a rectangular bounding box, or any other shape (regular or irregular) which surrounds a defect. Alternatively each ignore region 21 may comprise a collection of pixels which are each associated with a defect, that is they lie within the boundary of a defect.

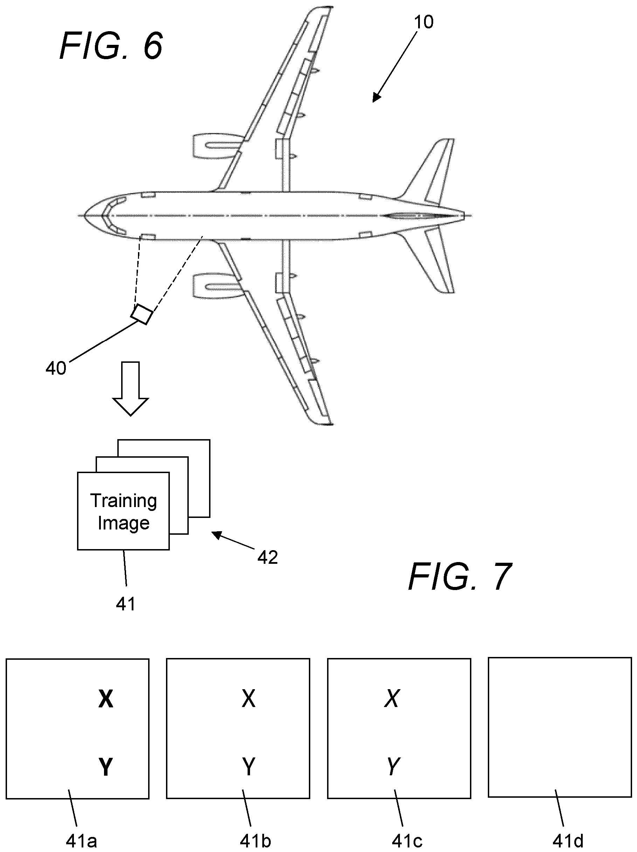

Training image data 42 is also generated by imaging the aircraft 10 from a series of different viewing angles as shown in Figure 6. The aircraft 10 may be imaged with visible light by a camera 40 which scans the entire outer surface of the aircraft 10. By way of example, a video of the aircraft may be acquired as the camera 40 moves continuously around the aircraft. The camera 40 may be held on the end of a robot arm or carried by an airborne drone. The video therefore comprises a series of frames, each frame comprising a training image 41 containing a respective part of the aircraft viewed from a different viewing angle. These training images 41 collectively provide a set of training image data 42. Note that the object in the training image data 42 (in this case, the aircraft 10) is the same as the object which is inspected to generate the ignore regions 21.

Any visible defect will be present in more than one training image, and each training mage may contain more than one defect. Figure 7 gives an example of a series four training images 4a-d which each contain the same pair of features viewed from a different viewing angle. In the first training image 41a, the two features (designated X and Y) are clearly visible, on the right-hand side of the frame of the training image. In the next training image 41b, the two features have moved slightly to the left and are slightly less visible (since they are being viewed from a different angle and under different illumination conditions). In the next training image 41c, the two features are still just visible, but only faintly. In the final training mage 41d, the features are hardly visible - for instance they may be completely obscured by glare.

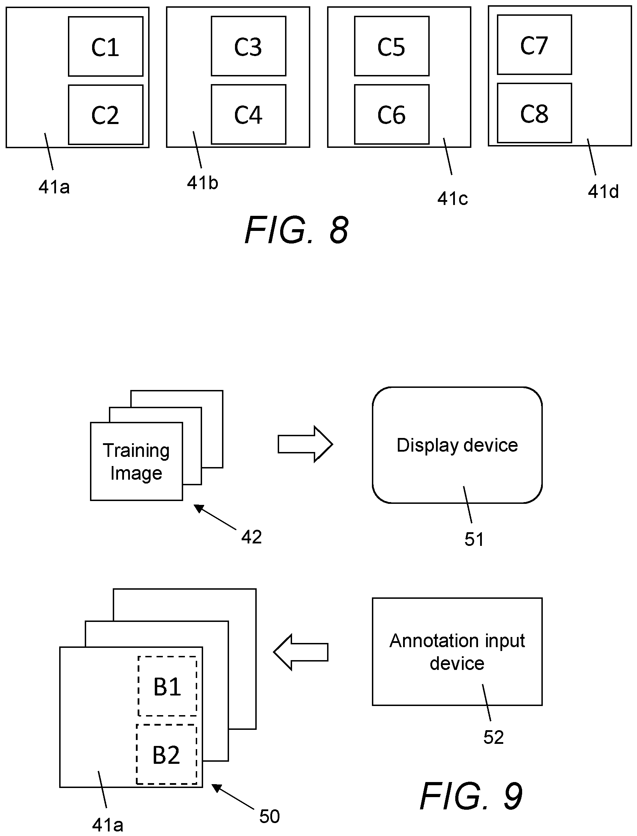

The two features (represented as X and Y in Figure 7) will each have an associated ignore region 21 and Figure 8 shows the positions of these ignore regions in each image (designated C1, C3, C5, C7 for the feature X, and C2, C4, C6, C8 for the feature Y) superimposed on the training images 41a-41d. Note that a pair of ignore regions are present in each training image, including the training image 41d in which the features are not visible.

A set 50 of groundtruth regions are also provided, each groundtruth region comprising an annotation of a feature in the training image data 42. As shown in Figure 9, the set 50 of groundtruth regions may be generated by displaying the training image data 42 to a human annotator via a display device 51 and receiving the groundtruth regions as inputs from the human annotator via an annotation input device 52. Each groundtruth region may comprise an annotation of a boundary of a feature in the training image data 42. For instance the annotator may mark a boundary around the feature using a mouse or similar input device. The boundary may be rectangular, or any other shape (including an irregular shape). Alternatively, the annotator may annotate the feature by "painting" over the feature in the training image using a digital painting tool, hence indicating a collection of pixels associated with the feature.

In Figure 9, two groundtruth regions B1, B2 are shown superimposed on a training image 41a. The groundtruth region B1 surrounds the feature X, and the groundtruth region B2 surrounds the feature Y. In this case each groundtruth region comprises a rectangular bounding box which surrounds a defect.

Note that not all of the training images in the training image data 42 may be displayed to the human annotator, and the training images may not be displayed in sequential order.

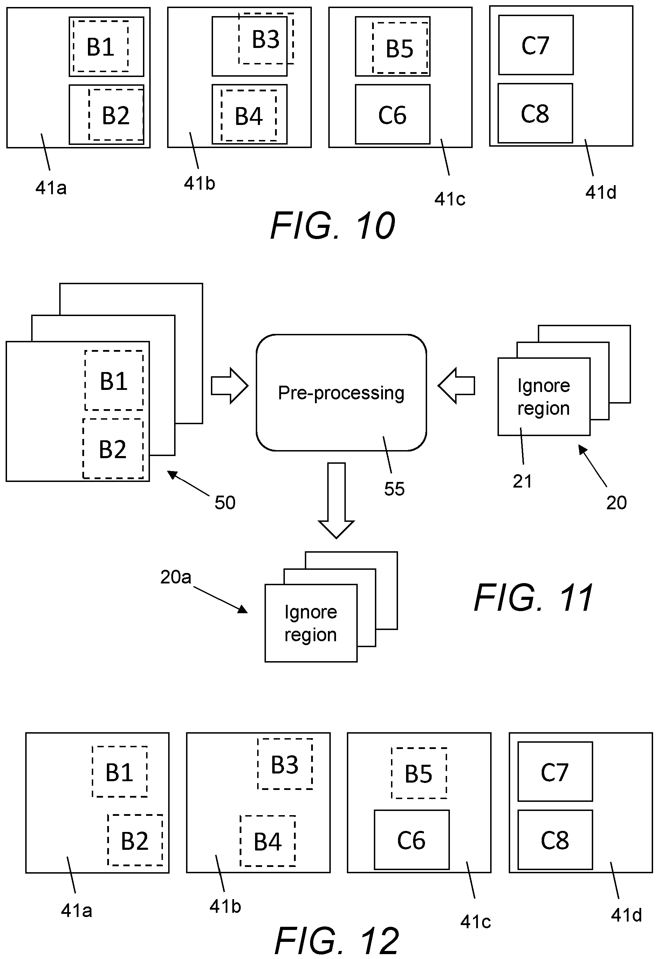

Figure 10 shows groundtruth regions B1-B5 superimposed on the ignore regions of Figure 8. Note that three of the ignore regions C6-C8 do not have an overlapping groundtruth region.

In a pre-processing stage shown in Figure 11, a pre-processing engine 55 generates a pre-processed set 20a of ignore regions. In the pre-processed set 20a, all ignore regions which overlap with a groundtruth region are removed. Figure 12 illustrates how the pre-processing stage changes the data shown in Figure 10. The ignore boxes C1-C5 which overlap with the groundtruth regions B1-B5 have been removed, leaving only three ignore regions C6-C8.

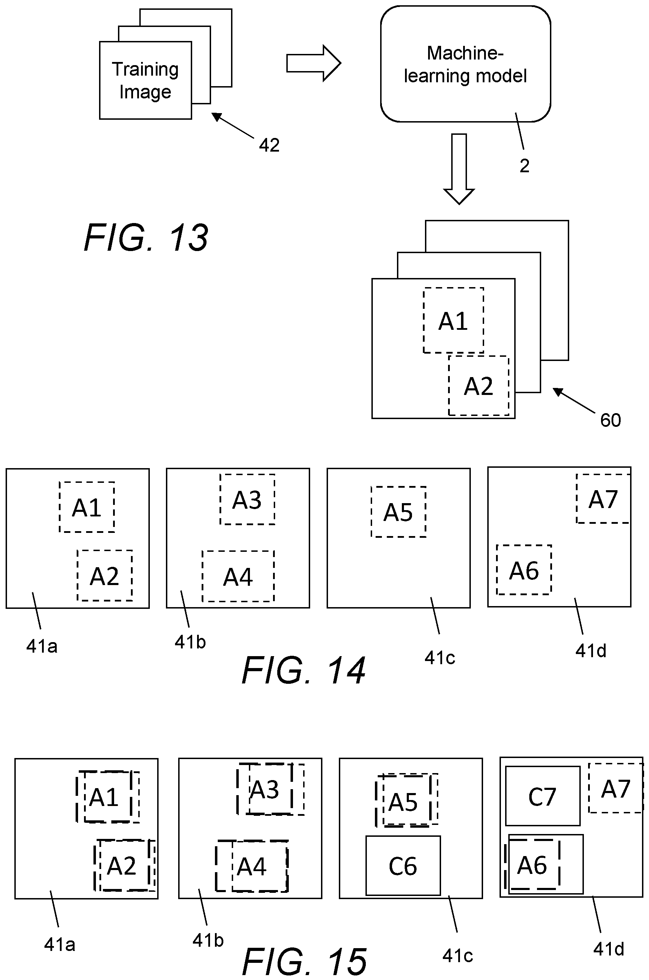

Once the groundtruth regions and ignore regions have been generated and pre-processed, the training engine 3 trains the machine-learning model 2 in a series of training epochs. In each training epoch, the training image data 42 is input into the machine-learning model 2 as shown in Figure 13.

The machine-learning model 2 comprises a neural network which identifies and classifies features in the training image data 42. For example a feature may be identified and classified as a dent. Other parts of the training image data may be classified as background.

The output of the machine-learning model 2 is a set 60 of predicted feature regions. Each predicted feature region may comprise a boundary of a defect, such as a rectangular bounding box, or any other shape (regular or irregular) which surrounds a defect. Alternatively each predicted feature region may comprise a collection of pixels which are each associated with a defect, that is they lie within the boundary of a defect.

Figure 14 gives an example of six predicted feature regions A1-A7 superimposed on the training images 41a-d. Each predicted feature region A1-A7 in this example is a rectangular bounding box which surrounds a feature which has been identified by the machine-learning model 2 and classified as a defect.

Figure 15 shows the six predicted feature regions A1-A7 superimposed on the ignore regions and groundtruth regions of Figure 12. Each predicted feature region A1-A5 overlaps with a groundtruth region B 1-B5. The predicted feature region A6 overlaps with an ignore region C8 but does not overlap with any of the groundtruth regions. The predicted feature region A7 does not overlap with an ignore region or with a groundtruth region. The ignore regions C6, C7 do not overlap with a predicted feature region or with an ignore region.

Note that the ignore regions have a larger area than their associated groundtruth region or their associated predicted feature region. For instance region C8 is larger than region A6, and region C5 is larger than region B5.

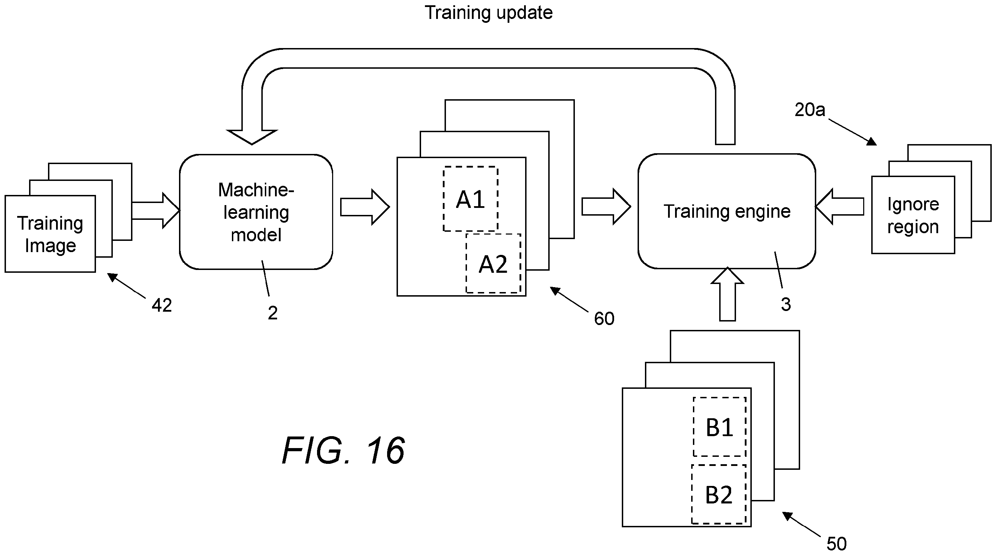

Figure 16 shows a method of training the machine-learning model by deep learning to identify image features, using the data described above. The training engine 3 receives the set 60 of predicted feature regions from the machine-learning model 2, the set 50 of groundtruth regions, and the pre-processed set 20a of ignore regions. For each training epoch, the training engine 3 applies a training update which adjusts the weights in the neural network of the machine-learning model 2.

Table 1 below illustrates how the method works in different scenarios. In Table 1, numeral 1 indicates presence of a region (before pre-processing) and numeral 0 indicates absence of a region (before pre-processing).

Table 1

| Scenario | Predicted | Ground truth | Ignore | Action(s) |
|---|---|---|---|---|
| #1 | 0 | 0 | 0 | Classify as background, or take no action |
| #2 | 0 | 0 | 1 | Ignore - do not train to learn as background |
| #3 | 0 | 1 | 0 | False negative. Feed groundtruth region into model |
| #4 | 0 | 1 | 1 | Remove ignore box in pre-processing, and feed groundtruth into model |
| #5 | 1 | 0 | 0 | False positive: classify as background, and/or unlearn |
| #6 | 1 | 0 | 1 | Ambiguous prediction: Ignore |
| #7 | 1 | 1 | 0 | True positive. Generate similarity coefficient |
| #8 | 1 | 1 | 1 | Remove ignore box in pre-processing, and generate similarity coefficient |

In a first scenario, labelled #1 in Table 1, there is no ignore region, no predicted feature region and no groundtruth region. In scenario #1, the action of the training engine 3 depends on whether the machine-learning model 2 has a background class. If so, the training engine 3 trains the machine-learning model 2 to classify the relevant part of the training image data 60 as background. If not, then the training engine 3 takes no action.

In a second scenario, labelled #2 in Table 1, there is an ignore region which does not does not overlap with any of the predicted feature regions and does not overlap with any of the groundtruth regions. See ignore regions C6 and C7 in Figure 15 as examples. This may be caused by a feature being unclear in the training image data or by an error in the generation of the ignore region. In scenario #2, the training engine 3 ignores the data, so it does not train the machine-learning model to classify the relevant part of the training image data as background. In other words, there is no feedback to the machine-learning model 2 via the training update path.

In a third scenario, labelled #3 in Table 1, there is a groundtruth region which does not overlap with any of the predicted feature regions and does not overlap with any of the ignore regions. In scenario #3, the training engine 3 may feed the groundtruth region into the machine-learning model 2, to train the machine-learning model 2 to classify the relevant part of the training image data as a defect.

In a fourth scenario, labelled #4 in Table 1, there is a groundtruth region which overlaps an ignore region but does not overlap with any of the predicted feature regions. In scenario #4, the pre-processing of Figure 11 removes the ignore region, and the training engine 3 feeds the groundtruth region into the machine-learning model 2, to train the machine-learning model 2 to classify the relevant part of the training image data as a defect. In scenario #4 we can be confident that a defect exists, because there is both an ignore region and a groundtruth region. Hence we can be confident that the lack of predicted feature regions is a false negative, requiring the machine-learning model 2 to learn to recognise the defect.

In a fifth scenario, labelled #5 in Table 1, there is a predicted feature region which does not overlap with any of the ignore regions and does not overlap with any of the groundtruth regions. See predicted feature region A7 as an example. This is likely to be a false positive, which requires the machine-learning model 2 to be trained to avoid making the same false positive in future training epochs. Hence in scenario #5, the training engine 3 trains the machine-learning model 2 on a basis of the predicted feature region.

In scenario #5, the training engine 3 may be trained on a basis of the predicted feature region in different ways. In one example, where the machine-learning model 2 has a background class, the training engine 3 may train the machine-learning model 2 to classify the relevant part of the training image data as background. In another example, for instance where the machine-learning model 2 does not have a background class, the training engine 3 may train the machine-learning model 2 to unlearn the predicted feature region A7. For example, the machine-learning model 2 may have predicted the predicted feature region A7 with a confidence level of 80%, and the training engine 3 trains the machine-learning model 2 to unlearn the predicted feature region A7 by setting this confidence level to 0%. In another example, in scenario #5 the training engine 3 may do both: i.e. classify the relevant part of the training image data as background and unlearn the predicted feature region.

In a sixth scenario, labelled #6 in Table 1, there is a predicted feature region which overlaps with a corresponding ignore region and does not overlap with any of the groundtruth regions. See predicted feature region A6 in Figure 15 as an example. This is an ambiguous prediction, which may be caused by a feature being unclear in the training image data 42. The ambiguous prediction in scenario #6 should not be used to train the machine-learning model 2. Hence in scenario #6 the training engine 3 ignores the predicted feature region A6 so that it is not used to train the machine-learning model 2. In other words, the presence of the ignore region prevents any feedback to the machine-learning model 2 via the training update path.

In a seventh scenario, labelled #7 in Table 1, there is a predicted feature region which overlaps with a corresponding groundtruth region and does not overlap with any of the ignore regions. Scenario #7 may be caused by an error in the generation of the ignore regions and will be rare. In scenario #7 the training engine 3 generates a similarity coefficient indicative of a similarity between the predicted feature region and the corresponding groundtruth region.

In an eighth scenario, labelled #8 in Table 1, there is a predicted feature region which overlaps with a corresponding groundtruth region and also overlaps with an ignore region. See predicted feature regions A1-A5 in Figure 15 as examples. In scenario #8, the pre-processing of Figure 11 removes the ignore region. Hence in scenario #8 the training engine 3 operates the same as in scenario #7 and generates a similarity coefficient indicative of a similarity between the predicted feature region and the corresponding groundtruth region.

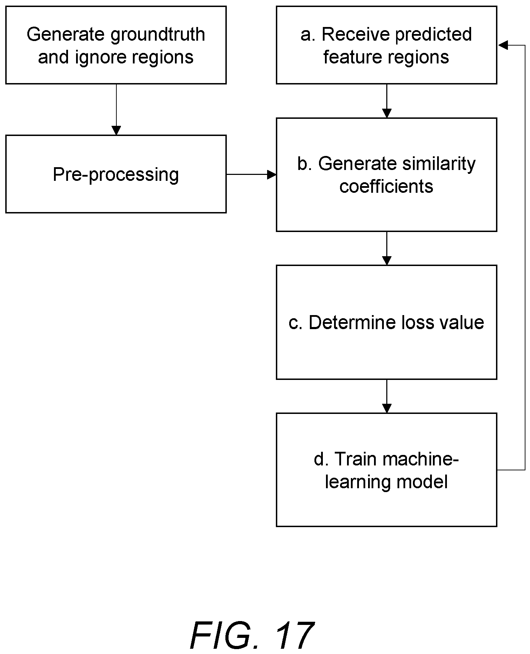

Figure 17 is a flow diagram describing how the training engine 3 trains the machine-learning model 2. After generation of the groundtruth regions and ignore regions, and pre-processing, a series of steps a.-d. are performed repeatedly, each repeat comprising a respective training epoch.

In step a. the training engine 3 receives a set of predicted feature regions from the machine-learning model 2, each predicted feature region comprising a prediction of a boundary of a feature in training image data.

In step b., the training engine 3 generates a set of similarity coefficients, each similarity coefficient indicative of a similarity between a predicted feature region and a corresponding groundtruth region which overlaps with the predicted feature region. By way of example, each similarity coefficient generated in step b. may be a Jaccard index: $IoU = |A \cap B|/|A \cup B|$. Alternatively, the similarity coefficient may be any other suitable indicator.

In step c., the training engine 3 determines a loss value based on the similarity coefficients.

In step d. the training engine 3 trains the machine-learning model 2 on a basis of the loss value. In step d. the training engine may also apply other required training updates - for example background classifications as in scenarios #1 and #5 or feeding groundtruths into the model as in scenarios #3 and #4.

After the machine-learning model 2 has been trained, it can be used later to identify surface defects of the aircraft 10 (or another aircraft) in an inference phase.

In step b., similarity coefficients are generated for each predicted feature region which overlaps with a corresponding groundtruth region, in other words for scenarios #7 and #8 in Table 1. In scenarios #7 and #8 there is no ambiguity because the defect has been identified by the machine-learning model 2 and also by the process of generating the ignore regions.

The ignore regions enable the computer system to differentiate between the false positive of scenario #5 (in which a predicted feature region A7 does not overlap with any of the ignore regions and does not overlap with any of the groundtruth regions) and the ambiguous case of scenario #6 (in which a predicted feature region A6 overlaps with a corresponding ignore region and does not overlap with any of the groundtruth regions).

In the false positive case of scenario #5 the training engine 3 trains the machine-learning model 2 on a basis of the predicted feature region A7, for instance by training the machine-learning model 2 to classify the predicted feature region A7 as a background class and/or by training the machine-learning model 2 to unlearn the predicted feature region A7.

In the ambiguous case of scenario #6 the training engine 3 ignores the predicted feature region A6. So the predicted feature region A6 is not used to train the machine-learning model 2, unlike in scenario #5. That is, the predicted feature region A6 is not used to unlearn the predicted feature region A6, and it is not used to train the machine-learning model 2 to classify the predicted feature region A6 as background.

Different ways of generating the loss value in step c. will now be described.

In one example, the loss value for each training epoch may be calculated in step c. by equation (1) below:

$$l_{box}(j) = \left( \sum_{i=1}^{N} \left| iou_{thresh}^{j} - iou^{i} \right| \right) / N \qquad (1)$$

where, $l_{box}(j)$ is the loss value for the $j^{th}$ training epoch (the loss value updating every training epoch via the training update path); $iou^{i}$ is the Jaccard index for the $i^{th}$ predicted feature region in the set 60 of predicted feature regions; $iou_{thresh}^{i}$ is a threshold for the $j^{th}$ training epoch; and $N$ is the total number of predicted feature regions in the set 60 of predicted feature regions.

Optionally the threshold $iou_{thresh}^{j}$ may be set to a value of 1 for all training epochs, in which case the loss value is simply taking the average of 1-IoU. The backpropagation algorithm will continuously try to improve the parameters of the machine-learning model 2 to ensure the loss value is zero, which means all the predicted feature regions align exactly with the groundtruth regions.

More preferably, the threshold $iou_{thresh}^{j}$ is set to an intermediate value (that is, a value less than 1 and greater than 0). In this case, some of the similarity coefficients $iou^{i}$ will be less than the threshold (so the difference is positive) and others will be greater than the threshold (so the difference is negative). In equation (1) the loss value is based on an absolute difference between the threshold and each similarity coefficient.

In the following discussion, similarity coefficients less than the threshold are referred to as "low similarity coefficients" and similarity coefficients greater than the threshold are referred to as "high similarity coefficients".

Over a full set of training epochs, a mixture of low and high similarity coefficients will be generated. Generally speaking, in one or more of the training epochs the set of similarity coefficients will comprise one or more low similarity coefficients, and in one or more of the training epochs the set of similarity coefficients will comprise one or more high similarity coefficients.

Depending on the value of the threshold, in some training epochs (for instance the earlier training epochs) only low similarity coefficients may be generated, in others only high similarity coefficients may be generated, and in others a mixture of low and high similarity coefficients may be generated.

Optionally the threshold is varied between at least two of the training epochs. For example, in a set of 100 training epochs, the threshold may be initially set at 1.0, then decreased until it reaches 0.8 at the $66^{th}$ training epoch, then fixed at 0.8 until the last ($100^{th}$) training epoch.

The threshold may be decreased every epoch until the $66^{th}$ training epoch, when it remains fixed at 0.8 until the last ($100^{th}$) training epoch. In this example, the threshold may decrease linearly (for instance decreasing by the same amount from epoch to epoch) or non-linearly (for instance following a cosine curve).

Instead of being decreased every epoch, the threshold may be decreased in a stepwise fashion, for instance dropping every five epochs - for example: 1.0, 1.0, 1.0, 1.0, 1.0, 0.992, 0.992, 0.992, 0.992, 0.992, etc.

In another example, the threshold may start at an intermediate value (for example 0.8) then increase to 1.0, then decrease.

Suppose the threshold is set to 0.7 and there are ten predicted feature regions to learn during a particular training epoch and the Jaccard indices of these ten predicted feature regions are 0.1, 0.3, 0.7, 0.9, 0.88, 0.95, 0.45, 0.67, 0.85, 0.58, then the loss calculation would be:

$$loss = (0.6 + 0.4 + 0.0 + 0.2 + 0.18 + 0.25 + 0.25 + 0.03 + 0.15 + 0.12)/10$$

The loss value in this case will be 2.18/10=0.218

Experiments have shown that setting the threshold as an intermediate value results in more accurate performance of the machine-learning model 2, compared with a baseline in which the threshold is set to 1.

In equation (1) both the high and low similarity coefficients are used to determine the loss value. In other embodiments, the high and low similarity coefficients may be treated differently. In a further embodiment the loss value may be based on equations (2) and (3):

$$\text{If } iou >= iou_{th,} iou = 1 \qquad (2)$$

$$loss = \sum(1 - iou)/N \qquad (3)$$

According to equation (2), whenever the Jaccard index crosses a threshold $iou_{th}$, it is clamped to 1 so that high similarity coefficients do not contribute to the loss value of equation (3).

Hence the loss value from equation (3) is based on a difference between the threshold and each low similarity coefficient, and any high similarity coefficients are ignored (by clamping them to 1).

The threshold $iou_{th}$ may be a user defined value depending on the amount of ambiguity. It can be set to a value below and close to 1, like 0.7, 0.8, 0.9, etc. So any prediction that has a low similarity coefficient with $iou < iou_{th}$ will be fed back to optimize, and other predictions are ignored.

Suppose there are ten predicted feature regions to learn during a particular training epoch and the Jaccard indices of these ten predicted feature regions are 0.1, 0.3, 0.7, 0.9, 0.88, 0.95, 0.45, 0.67, 0.85, 0.58, then the usual loss calculation would be taking an average of all ten Jaccard indices:

$$loss = (0.9 + 0.7 + 0.3 + 0.1 + 0.12 + 0.05 + 0.55 + 0.33 + 0.15 + 0.42)/10$$

The loss value in this case will be 3.62/10=0.362.

Suppose the threshold $iou_{th}$ is set to 0.7, then modifying the loss value by equation (2) results in a modified loss value:

$$loss = (0.9 + 0.7 + 0.0 + 0.0 + 0.0 + 0.0 + 0.55 + 0.33 + 0.0 + 0.42)/10$$

The modified loss value will be lower than the average of 0.362, i.e. 2.9/10=0.29.

To sum up, two alternative methods are described above for determining the loss value which is used to train the machine-learning model 2: a first method using equation (1) and a second method using equations (2) and (3). Both methods determine the loss value based on similarity coefficients and a threshold, which avoids training the machine-learning model 2 to generate predicted feature regions which align exactly with the groundtruth regions. This avoids "over-training" the machine-learning model 2 based on ambiguous features, by not strictly converging the predictions to the perfect IoU value of 1.

The embodiments described above include two methods. The first method, exemplified in Table 1, uses ignore regions to ignore ambiguous predictions. The second method, exemplified in equations (1) and (2), uses a threshold to determine a loss value which is less likely to cause "over-training" of the machine-learning model.

The two methods may be implemented together, as described above, or separately. That is, the first method may be implemented with a conventional loss value which is based on an average of 1-IoU for all similarity coefficients, as in equation (4) below.

$$loss = \sum(1 - iou)/N \qquad (4)$$

Conversely, the second method may be implemented in a conventional training process which does not use ignore regions to ignore ambiguous predictions, as in Table 1.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

**Claims**

1. A method of training a machine-learning model to identify image features, the method comprising:

   a. providing a set of groundtruth regions, each groundtruth region comprising an annotation of a feature in training image data;
   b. providing a set of ignore regions;
   c. receiving a set of predicted feature regions from the machine-learning model, each predicted feature region comprising a prediction of a feature in the training image data;
   d. for each predicted feature region which overlaps with a corresponding groundtruth region, generating a similarity coefficient indicative of a similarity between the predicted feature region and the corresponding groundtruth region;

e. determining a loss value based on the similarity coefficients;

f. training the machine-learning model on a basis of the loss value;

g. for each predicted feature region which does not overlap with any of the ignore regions and does not overlap with any of the groundtruth regions, training the machine-learning model on a basis of the predicted feature region; and

h. for each predicted feature region which overlaps with a corresponding ignore region and does not overlap with any of the groundtruth regions, ignoring the predicted feature region so that it is not used to train the machine-learning model.

2. A method according to claim 1, wherein b. comprises providing the set of ignore regions by inspecting an object and generating the ignore regions on a basis of the inspection.

3. A method according to claim 2, wherein the training image data comprises one or more images of the object.

4. A method according to claim 2, wherein the training image data comprises a series of images of the object which each contain the same feature viewed from a different viewing angle.

5. A method according to any preceding claim, wherein the training image data comprises a series of images of an object which each contain the same feature viewed from a different viewing angle.

6. A method according to any preceding claim, wherein a. comprises providing the set of groundtruth regions by displaying the training image data to a human annotator and receiving the groundtruth regions as inputs from the human annotator, each groundtruth region comprising an annotation of a boundary of a feature in the training image data.

7. A method according to any preceding claim, wherein c.-f. are repeated, each repeat comprising a respective training epoch.

8. A method according to any preceding claim, wherein c.-h. are repeated, each repeat comprising a respective training epoch.

9. A method according to any preceding claim, wherein each feature comprises a surface defect.

10. A method according to any preceding claim, wherein the similarity coefficient is a Jaccard index.

11. A method according to any preceding claim, comprising:

a. for each predicted feature region which does not overlap with any of the ignore regions and does not overlap with any of the groundtruth regions, training the machine-learning model to classify the predicted feature region as a background class; and

b. for each predicted feature region which overlaps with a corresponding ignore region and does not overlap with any of the groundtruth regions, ignoring the predicted feature region so that it is not used to train the machine-learning model to classify the predicted feature region as a background class.

12. A method of training a machine-learning model to identify image features, the method comprising:

providing a set of groundtruth regions, each groundtruth region comprising an annotation of a feature in training image data;

providing a set of ignore regions;

receiving a set of predicted feature regions from the machine-learning model, each predicted feature region comprising a prediction of a feature in the training image data;

for each predicted feature region which overlaps with a corresponding groundtruth region, generating a similarity coefficient indicative of a similarity between the predicted feature region and the corresponding groundtruth region;

determining a loss value based on the similarity coefficients;

training the machine-learning model on a basis of the loss value;

for each predicted feature region which does not overlap with any of the ignore regions and does not overlap with any of the groundtruth regions, training the machine-learning model to classify the predicted feature region as background; and

for each predicted feature region which overlaps with a corresponding ignore region and does not overlap with any of the groundtruth regions, ignoring the predicted feature region so that it is not used to train the machine-learning model to classify the predicted feature region as background.

13. A method of training a machine-learning model to identify image features, the method comprising:

providing a set of groundtruth regions, each groundtruth region comprising an annotation of a feature in training image data;

providing a set of ignore regions;

receiving a set of predicted feature regions from the machine-learning model, each predicted feature region comprising a prediction of a feature in the training image data;

for each predicted feature region which overlaps with a corresponding groundtruth region, generating a similarity coefficient indicative of a similarity between the predicted feature region and the corresponding groundtruth region;

determining a loss value based on the similarity coefficients;

training the machine-learning model on a basis of the loss value;

for each predicted feature region which does not overlap with any of the ignore regions and does not overlap with any of the groundtruth regions, training the machine-learning model to unlearn the predicted feature region; and

for each predicted feature region which overlaps with a corresponding ignore region and does not overlap with any of the groundtruth regions, ignoring the predicted feature region so that it is not used to train the machine-learning model to unlearn the predicted feature region.

14. A computer system configured to train a machine-learning model by the method of any preceding claim.

15. Computer software configured to train a machine-learning model by the method of any of claims 1 to 13.

*FIG. 1*

*FIG. 2*

10

*FIG. 3*

DMU —— 23

20

Ignore region generator —— 24

Ignore region

21

Input device —— 22

*FIG. 4*

10

30

*FIG. 5*

20

DMU

23

Automatic
ignore region
generator

32

LIDAR data

31

Ignore
region

21

*FIG. 6*

10

40

Training
Image

42

41

*FIG. 7*

| | | | |
|---|---|---|---|
| **X** **Y** | X Y | *X* *Y* | |

41a  41b  41c  41d

FIG. 8

FIG. 9

*FIG. 10*

*FIG. 11*

*FIG. 12*

*FIG. 13*

*FIG. 14*

*FIG. 15*

*FIG. 16*

FIG. 17

Europäisches
Patentamt

European
Patent Office

Office européen
des brevets

# EUROPEAN SEARCH REPORT

**Application Number**

EP 24 21 2335

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AKTAS MUSTAFA ET AL: "Small Object Detection and Tracking from Aerial Imagery", 2021 6TH INTERNATIONAL CONFERENCE ON COMPUTER SCIENCE AND ENGINEERING (UBMK), IEEE, 15 September 2021 (2021-09-15), pages 688-693, XP033987056, DOI: 10.1109/UBMK52708.2021.9558923 [retrieved on 2021-10-04] * sections III and IV; figures 1-4 * | 1-15 | INV. G06V10/764 G06N3/09 G06T7/00 G06V10/774 G06V10/82 G06V20/60 |
| L | SHAOQING REN ET AL: "Faster R-CNN: Towards Real-Time Object Detection with Region Proposal Networks", ADVANCES IN NEURAL INFORMATION PROCESSING SYSTEMS (NIPS 2015), 7 December 2015 (2015-12-07), XP055488147, * sections 3 and 4; figure 1 * | | |
| L | ROSS GIRSHICK ET AL: "Rich Feature Hierarchies for Accurate Object Detection and Semantic Segmentation", 2014 IEEE CONFERENCE ON COMPUTER VISION AND PATTERN RECOGNITION, 1 June 2014 (2014-06-01), pages 580-587, XP055612110, DOI: 10.1109/CVPR.2014.81 ISBN: 978-1-4799-5118-5 * section 2 and 3; figures 1-3 * | | TECHNICAL FIELDS SEARCHED (IPC) G06V G06T G06N |

-/--

The present search report has been drawn up for all claims

| Place of search | Date of completion of the search | Examiner |
|---|---|---|
| The Hague | 18 March 2025 | Atmatzidis, Lazaros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

**Application Number**

EP 24 21 2335

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | ZHU PENGFEI ET AL: "Detection and Tracking Meet Drones Challenge", IEEE TRANSACTIONS ON PATTERN ANALYSIS AND MACHINE INTELLIGENCE, IEEE COMPUTER SOCIETY, USA, vol. 44, no. 11, 13 October 2021 (2021-10-13), pages 7380-7399, XP011921843, ISSN: 0162-8828, DOI: 10.1109/TPAMI.2021.3119563 [retrieved on 2021-10-14] * sections 1-3; figure 1 *<br>----- | | |
| | | | TECHNICAL FIELDS SEARCHED (IPC) |

The present search report has been drawn up for all claims

| Place of search | Date of completion of the search | Examiner |
|---|---|---|
| The Hague | 18 March 2025 | Atmatzidis, Lazaros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)